# EUROPEAN PATENT APPLICATION

(11) **EP 4 765 468 A1**
(43) Date of publication of application: **24.06.2026**
(21) Application number: 25833586.8
(22) Date of filing: 01.07.2025
(51) Int. Cl.: H01M 50/645, H01M 50/152, H01M 10/0587, H01M 50/249, H01M 50/636

(54) **BATTERY CELL AND BATTERY PACK AND VEHICLE INCLUDING SAME**

(30) Priority: 02.07.2024 KR 20240087170; 30.06.2025 KR 20250087109
(71) Applicant: LG Energy Solution, Ltd., Seoul 07335 (KR)
(72) Inventor: CHO, Sung-Min, Daejeon 34122 (KR); KIM, Do-Gyun, Daejeon 34122 (KR); BAEK, Jun-Ho, Daejeon 34122 (KR); LEE, Seung-Hun, Daejeon 34122 (KR); HONG, Tae-Rim, Daejeon 34122 (KR); HWANG, Dong-Sung, Daejeon 34122 (KR)
(74) Representative: Goddar, Heinz J.
(86) International application number: PCT/KR2025/009372
(87) International publication number: WO 2026/010339

(57) **Abstract**

A battery cell according to an embodiment of the present disclosure may include an electrode assembly configured by winding a first electrode, a second electrode, and a separator interposed therebetween around a winding axis, a can configured to receive the electrode assembly through an open end formed on one side, a lid configured to cover the open end and having an injection hole formed therein, and a plug configured to seal the injection hole, wherein the plug may include a lid-coupling portion positioned on the lid, an insertion portion positioned radially inward from the lid-coupling portion and protruding from the lid-coupling portion so as to be inserted into the injection hole, and an edge portion positioned at an edge of the lid-coupling portion and recessed further downward than the lid-coupling portion in a winding axis direction.

## Description

### TECHNICAL FIELD

The present disclosure relates to a battery cell, and a battery pack and vehicle including the same.

This application is based on and claims priority from Korean Patent Application No. 10-2024-0087170, filed on July 02, 2024, with the Korean Intellectual Property Office, the disclosure of which is incorporated herein in its entirety by reference.

This application is based on and claims priority from Korean Patent Application No. 10-2025-0087109, filed on June 30, 2025, with the Korean Intellectual Property Office, the disclosure of which is incorporated herein in its entirety by reference.

### BACKGROUND ART

Cylindrical battery cells store a jelly-roll-type electrode assembly inside a cylindrical metal can, thereby exhibiting greater resistance to impact and temperature compared to pouch-type batteries. Accordingly, demand for metal can-type battery cells for vehicle battery packs is increasing.

The process of manufacturing a battery cell using a cylindrical can includes deep-drawing a metal sheet to form a circular bottom and a circular and tubular side wall integrally connected thereto, inserting the electrode assembly therein, and covering the open end of the side wall with a lid.

Crimping or seam welding may be used to fix the lid covering the open end to a battery can.

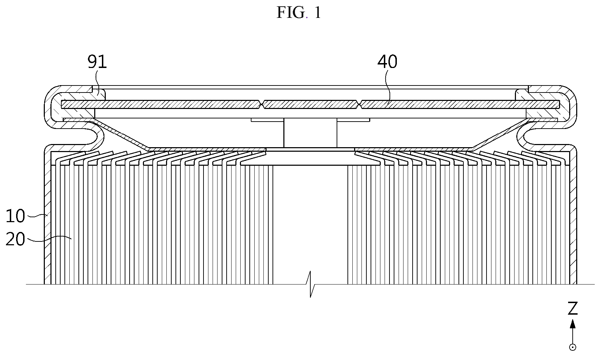

FIG. 1 illustrates a conventional method of securing the lid and the battery can by crimping.

Referring to FIG. 1, crimping is a method of interposing a sealing ring 91 and physically pressing the edge of the lid 40 against the open end of the can 10, thereby fixing the lid 40. Since crimping is a physical fixation method without the application of heat, it may be performed while the electrolyte remains inside the can 10. Therefore, the crimping method provides an advantage in that it eliminates the need for a separate electrolyte injection hole structure and the sealing mechanism associated therewith. However, crimping is structurally more complex than welding, which may reduce the internal volume of the can 10 available for accommodating the electrode assembly. 20.

On the other hand, seam welding is a method of aligning the end edge of the side wall of the battery can with the edge of the lid and welding them along the peripheral edge, which provides simpler fixation structure, thereby securing a larger volume of electrode assembly to be stored inside the battery can. Therefore, the seam welding is more advantageous in securing a larger electrical capacity for the same volume of the battery can.

When coupling the periphery of the open end of a battery can to the lid by seam welding, a method may be employed, which includes preparing a battery can having an injection hole at the bottom or a lid having an injection hole, storing the electrode assembly inside the battery can, seam-welding the battery can and lid, injecting electrolyte through the injection hole, and sealing the injection hole after the injection is complete.

However, when welding the injection hole cap and lid to seal the injection hole, a bead created during the welding process may protrude from the surface of the lid or injection hole cap. This may reduce the contact area between the lid of the battery cell and the heat sink for bottom cooling of the battery pack. Since the cooling performance of the battery pack is proportional to the contact area between the heat sink and the lid, this may degrade the cooling performance of the battery pack.

Therefore, it is necessary to develop an injection hole sealing structure that prevents beads or the like from protruding from the lid or injection hole cap.

### DISCLOSURE

### Technical Problem

The present disclosure is designed to solve the problems of the related art, and therefore the present disclosure is directed to providing a battery cell with an improved injection hole sealing structure, and a manufacturing method thereof.

In addition, the present disclosure is also to provide an injection hole sealing structure that maximizes the contact area between the heat sink and the lid of a battery cell in a battery pack including a plurality of battery cells.

The present disclosure is directed to providing a battery cell including such a sealing structure, and a manufacturing method thereof.

In addition, the present disclosure is also to provide a battery cell with a high energy density by eliminating the beading and crimping structure from the battery cell, and a vehicle equipped with a battery pack including the battery cell.

The technical problems that the present disclosure seeks to solve are not limited to the above-mentioned problems, and other problems not mentioned above will be clearly understood by those skilled in the art from the description of the invention described below. In addition, it will be understood that the foregoing and other objects and advantages of the present disclosure can be realized by the features defined in the appended claims and combinations thereof.

### Technical Solution

In one aspect of the present disclosure, there is provided a battery cell including an electrode assembly configured by winding a first electrode, a second electrode, and a separator interposed therebetween around a winding axis, a can configured to receive the electrode assembly through an open end formed on one side, a lid configured to cover the open end and having an injection hole formed therein, and a plug configured to seal the injection hole, wherein the plug may include a lid-coupling portion positioned on the lid, an insertion portion positioned radially inward from the lid-coupling portion and protruding from the lid-coupling portion so as to be inserted into the injection hole, and an edge portion positioned at an edge of the lid-coupling portion and recessed further downward than the lid-coupling portion in a winding axis direction.

The edge portion may be configured in the form of a ring along a circumferential edge of the plug.

The edge portion may be formed by forging an edge of the lid-coupling portion.

The maximum recess depth of the edge portion in the winding axis direction may be in a range of 20% to 60% of the thickness of the lid-coupling portion in the winding axis direction.

A weld bead formed during welding of the plug and the lid may be configured to settle on the edge portion.

The maximum recess depth of the edge portion in the winding axis direction may be greater than the maximum thickness of the weld bead formed along the winding axis direction.

The edge portion may include an edge side surface extending downward from an upper surface of the lid-coupling portion, and an edge bottom surface extending radially outward from a lower end of the edge side surface.

The lid may include a body, and a plug-coupling portion surrounding the injection hole and recessed further downward than the body in the winding axis direction, and configured such that the lid-coupling portion is seated thereon.

The height of an upper surface of the lid-coupling portion of the plug in the winding axis direction is less than the height of an upper surface of the body of the lid in the winding axis direction.

The lid-coupling portion of the plug and the body of the lid may be welded to each other while abutting each other in a radial direction.

The edge portion may include an edge inclined surface inclined downward and radially outward from an upper surface of the lid-coupling portion.

The insertion portion may be configured to be inserted into the injection hole by force-fitting to primarily seal the injection hole.

The lid-coupling portion and the insertion portion may have the same thickness in the winding axis direction and may be formed integrally.

In another aspect of the present disclosure, there is provided a battery pack including a battery cell according to an embodiment of the present disclosure.

In another aspect of the present disclosure, there is provided a vehicle including a battery pack according to an embodiment of the present disclosure.

### Advantageous Effects

According to one aspect of the present disclosure, an injection hole sealing structure and method for improving injection hole sealing reliability are provided.

According to one aspect of the present disclosure, an injection hole sealing structure and method for maximizing the contact area between the heat sink and the lid and/or plug of a battery cell in a battery pack are provided.

According to one aspect of the present disclosure, an injection hole sealing structure and method for ensuring the flatness of the battery cell are provided.

According to one aspect of the present disclosure, a portion of the plug is inserted into the injection hole to secure temporary sealing force, thereby preventing external leakage of electrolyte vapor. In addition, a portion of the lid and the edge of the plug are thermally bonded to secure a high final sealing force. Since thermal bonding is performed while preventing external leakage of electrolyte vapor, for example, when laser welding is used for thermal bonding, this may prevent welding defects and ignition.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating a conventional method of fixing a lid and a battery can using crimping.
FIG. 2 is a perspective view of a battery cell according to an embodiment of the present disclosure.
FIG. 3 is a perspective view of first and second electrodes and separators before they are laminated for fabricating an electrode assembly to be stored in a battery can according to an embodiment of the present disclosure.
FIG. 4 is a perspective view of an electrode assembly manufactured by winding the laminate in FIG. 3 into a jelly-roll shape.
FIGS. 5 and 6 are perspective views illustrating a state in which a current collector is bonded to respective ends of an electrode assembly according to an embodiment of the present disclosure.
FIG. 7 is a cross-sectional view illustrating a process in which an electrode assembly is received inside a battery can.
FIG. 8 is a cross-sectional view illustrating a state in which a can storing an electrode assembly is covered and sealed with a lid according to an embodiment of the present disclosure.
FIG. 9 is a cross-sectional view illustrating a state in which an injection hole of a lid is sealed with a plug according to an embodiment of the present disclosure.
FIG. 10 is an enlarged cross-sectional view of a coupling portion between the lid and the plug in FIG. 9.
FIG. 11 is a cross-sectional view of a plug according to an embodiment of the present disclosure.
FIG. 12 is a cross-sectional view of a plug and a lid coupled to each other according to an embodiment of the present disclosure.
FIG. 13 is a cross-sectional view of a coupling structure of a lid and a plug according to another embodiment of the present disclosure.
FIG. 14 is a cross-sectional view of a coupling structure of a lid and a plug according to another embodiment of the present disclosure.
FIG. 15 is a cross-sectional view of a lid and a plug after welding according to another embodiment of the present disclosure.
FIG. 16 is a cross-sectional view of a coupling structure of a lid and a plug according to another embodiment of the present disclosure.
FIG. 17 is a cross-sectional view of a lid and a plug after welding according to another embodiment of the present disclosure.
FIG. 18 is a cross-sectional view of a plug according to another embodiment of the present disclosure.
FIG. 19 is a cross-sectional view illustrating a lid and a plug coupled to each other according to another embodiment of the present disclosure.
FIG. 20 is a flowchart of a method for manufacturing a battery cell to which an injection hole sealing structure of the present disclosure is applied.
FIG. 21 is a drawing illustrating a battery pack according to an embodiment of the present disclosure.
FIG. 22 is a drawing illustrating a vehicle including the battery pack in FIG. 21.

### BEST MODE

Hereinafter, preferred embodiments of the present disclosure will be described in detail with reference to the accompanying drawings.

The present disclosure is not limited to the embodiments set forth below, but may be subject to various modifications and implemented in various different forms. The embodiments are provided merely to ensure the completeness of the disclosure of the present invention and to fully convey the scope of the invention to those of ordinary skill in the art. Therefore, the present disclosure is not limited to the embodiments set forth below, and it should be understood that the replacement or addition of components of one embodiment with or to those of another embodiment is possible, and that all modifications, equivalents, and substitutions that fall within the technical concept and scope of the present disclosure are encompassed thereby.

In addition, the present disclosure may include various embodiments. Redundant descriptions of substantially the same or similar configurations will be omitted from respective embodiments, and a description will be made based on differences therebetween.

The accompanying drawings are provided merely for the purpose of facilitating the understanding of the embodiments disclosed in the present specification, and the technical concept disclosed herein should not be construed as being limited by the drawings. It should be understood that all modifications, equivalents, and substitutions falling within the concept and scope of the present disclosure are included. In the drawings, the sizes or thicknesses of elements may be exaggerated or reduced for the sake of clarity and convenience of understanding, but this should not be construed as limiting the scope of the present disclosure.

The terms used herein are intended only to describe particular embodiments and implementations, and are not intended to limit the scope of the present disclosure. In addition, the singular forms used herein are intended to include the plural forms as well, unless the context clearly indicates otherwise. The terms such as "comprise" or "include" as used herein are intended to specify the presence of stated features, integers, steps, operations, elements, components, or combinations thereof, but do not preclude the presence or addition of one or more other features, integers, steps, operations, elements, components, or combinations thereof.

Ordinal terms such as "first," "second," and the like may be used to describe various components, but the components are not limited by these terms. These terms are used solely to distinguish one component from another. Therefore, unless explicitly stated otherwise, a first component may be the same as a second component.

Throughout the specification, unless otherwise expressly stated, each component may be singular or plural.

The singular expressions used herein are intended to include the plural expressions unless the context clearly indicates otherwise. In the present application, terms such as "comprise" or "include" should not be interpreted as necessarily encompassing all of the various components or steps described in the specification, and some of the components or steps may be omitted, or additional components or steps may be further included.

When it is stated that a certain component is "connected to" or "coupled to" another component, it should be understood that the component may be directly connected or coupled to the other component, or that one or more other components may exist therebetween. On the other hand, when it is stated that a certain component is "directly connected to" or "directly coupled to" another component, it should be understood that no other component exists therebetween.

When it is stated that a certain component is "above" or "below" another component, it should be understood that the component may be positioned directly above or below the other component, or that one or more other components may exist therebetween.

Unless otherwise defined, all terms used herein, including technical and scientific terms, shall have the same meanings as commonly understood by those of ordinary skill in the art to which the present disclosure pertains. Terms generally defined in commonly used dictionaries are to be interpreted as having meanings consistent with the context of the related art, and shall not be interpreted in an idealized or overly formal sense unless explicitly defined otherwise in the present application.

Meanwhile, although terms indicating directions such as upward, downward, left, right, frontward, and backward are used in this specification, it is obvious to those skilled in the art to which the present disclosure pertains that these terms are only for convenience of explanation with reference to the relevant drawings and may vary depending on the position, arrangement, or rotation of the target object or the position of the observer.

Throughout the specification, unless otherwise stated, the expression "A and/or B" may refer to A, B, or both A and B, and the expression "C to D" may refer to a range including values equal to or greater than C and equal to or less than D.

In describing the embodiments, the term "winding axis direction" refers to the direction in which the axis passing through the winding center of the jelly-roll-type electrode assembly extends, and the term "radial direction" refers to a direction approaching (centripetal) or moving away from (centrifugal) the axis. The term "circumferential direction" refers to a direction encircling the axis.

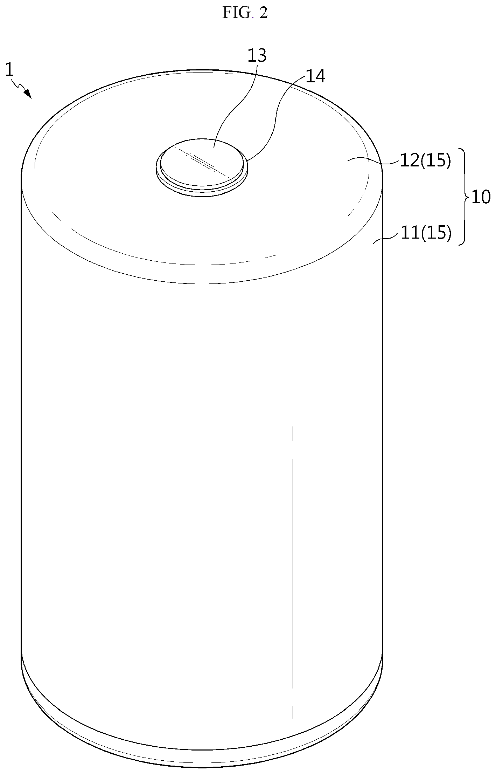

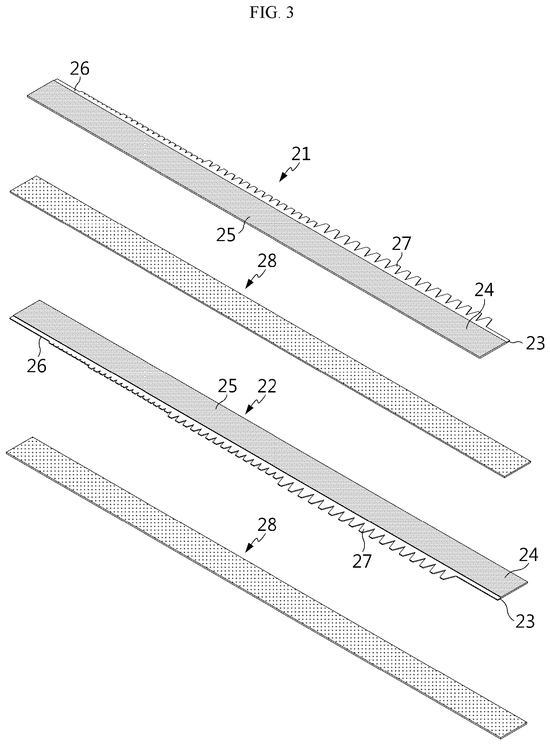

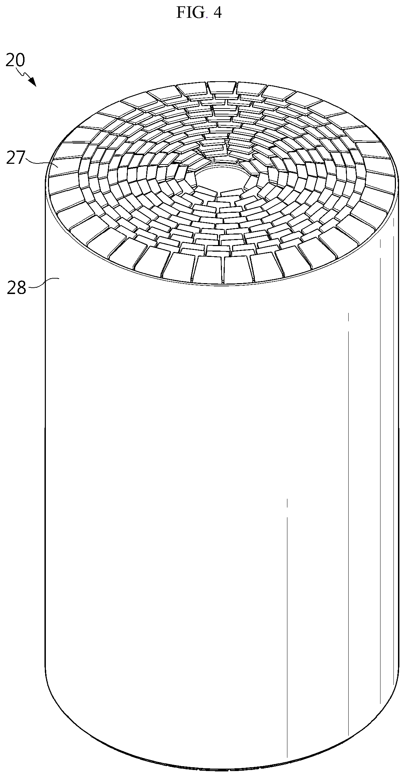

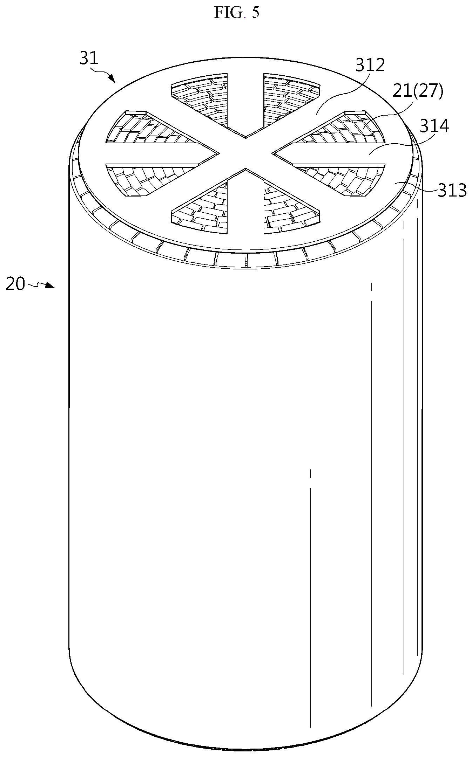

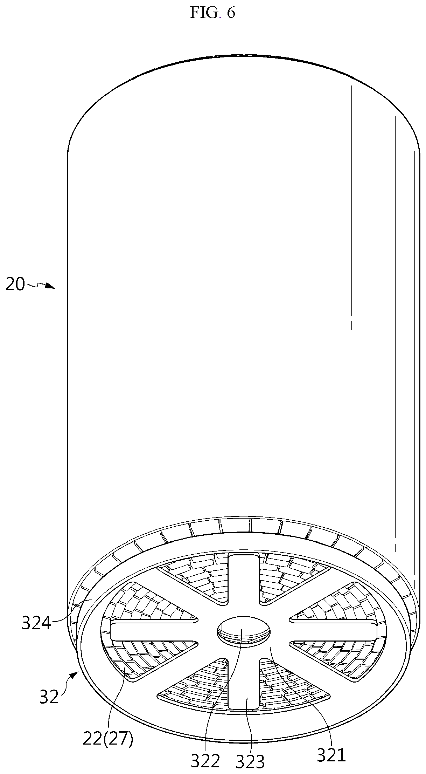

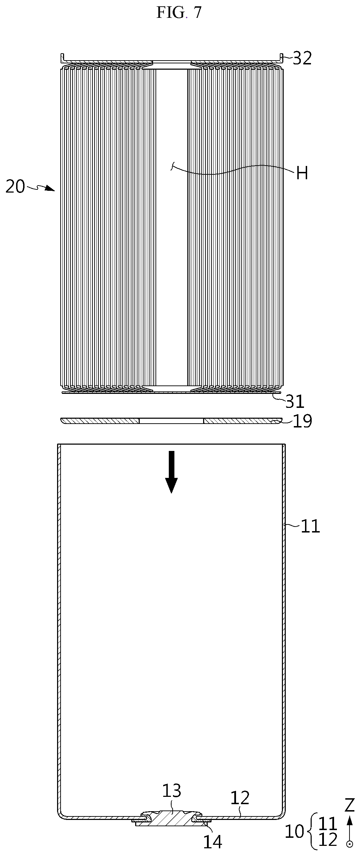

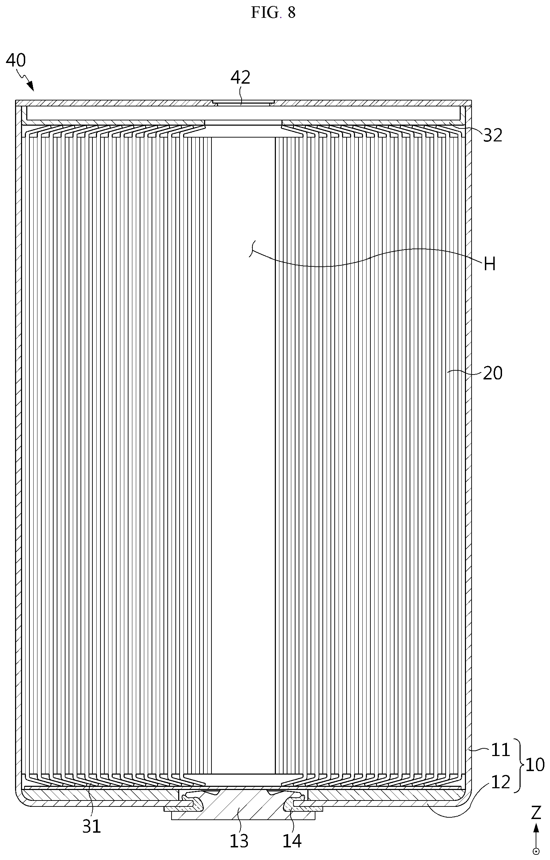

FIG. 2 is a perspective view of a battery cell according to an embodiment of the present disclosure. FIG. 3 is a perspective view of first and second electrodes and separators before they are laminated for fabricating an electrode assembly to be stored in a battery can according to an embodiment of the present disclosure. FIG. 4 is a perspective view of an electrode assembly manufactured by winding the laminate in FIG. 3 into a jelly-roll shape. FIGS. 5 and 6 are perspective views illustrating a state in which a current collector is bonded to respective ends of an electrode assembly according to an embodiment of the present disclosure. FIG. 7 is a cross-sectional view illustrating a process in which an electrode assembly is received inside a battery can. FIG. 8 is a cross-sectional view illustrating a state in which a can storing an electrode assembly is covered and sealed with a lid according to an embodiment of the present disclosure.

Hereinafter, an embodiment of a battery cell 1 to which a sealing structure of an injection hole 42 according to the present disclosure is applied will be described in detail with reference to FIGS. 2 to 8.

A battery cell 1 may be manufactured by storing a cylindrical electrode assembly 20 inside a cylindrical battery can 10.

The battery cell 1 of the embodiment may include an electrode assembly 20, current collectors 31 and 32 electrically connected to the electrode assembly 20, and a can 10 accommodating the electrode assembly 20 and the current collectors 31 and 32.

The can 10 may include a side wall 11 extending in the winding axis direction between first and second ends, and a bottom 12 connected to the first end of the side wall 11 and extending radially. The second end of the side wall 11 in the winding axis direction may be open.

The open end of the side wall 11 may be sealed by covering it with a lid 40 after inserting the electrode assembly 20 into the can 10.

The bottom 12 may be configured in the form of a disk having a hole formed in the center, and the side wall 11 may have a circular tube shape.

The bottom 12 and the side wall 11 may be manufactured by deep-drawing a nickel-plated steel sheet into a specific shape and then trimming the end of the side wall 11 with a punch while holding it with a blank holder. However, the material of the can 10 is not limited thereto.

A first electrode terminal 13 may be fitted into the hole. The first electrode terminal 13 may be riveted to the bottom 12 with a terminal gasket 14 interposed therebetween. The terminal gasket 14 may be interposed between the first electrode terminal 13 and the bottom 12, thereby sealing the inside and outside of the can 10 to prevent electrolyte leakage and electrically insulating the first electrode terminal 13 and the bottom 12 from each other.

However, the connection method between the first electrode terminal 13 and the bottom 12 is not limited thereto. For example, various other fixing methods, such as bolt-nut coupling, glass sealing, or chrome coating and PP-MAH thermal bonding, for sealing the gap between the first electrode terminal 13 and the bottom 12 and electrically insulating them from each other may be applicable to the above connection.

The first electrode terminal 13 may have a first polarity, and the can 10 may have a second polarity. That is, the bottom 12 of the can 10, the side wall 11 connected thereto, and the lid 40 connected to the side wall 11, which will be described later, may all have a second polarity.

Accordingly, the battery cell 1 may have both the first electrode terminal 13 and the second electrode terminal 15 positioned at the winding axis direction end, i.e., a closed end, where the bottom 12 is provided. Then, a busbar connected to the first electrode terminal 13 and a busbar connected to the second electrode terminal 15 may both be positioned at the upper portion of the battery cell 1.

As an example, the first electrode terminal 13 may be a positive electrode terminal, and the second electrode terminal 15 may be a negative electrode terminal, or vice versa.

An electrode assembly 20 is stored inside the can 10.

The electrode assembly 20 may be configured in the form of a jelly-roll in which a first electrode 21, a second electrode 22, and a separator 28 interposed therebetween are wound around the winding axis. The outer surface of the electrode assembly 20 may be shaped into a circle along the circumferential direction of the electrode assembly 20. However, the structure of the electrode assembly 20 is not limited to the embodiment, and may have any winding structure well known in the art.

Specifically, the electrode assembly 20 may be manufactured as a cylindrical jelly-roll obtained by preparing a first electrode 21, a second electrode 22, and a separator 28 having predetermined widths and extending predetermined lengths along the winding direction, as shown in FIG. 3, sequentially laminating the first electrode 21, the separator 28, the second electrode 22, and the separator 28 to form a laminate, and then winding the laminate around the winding axis, as shown in FIG. 4 . The structure of the electrode assembly 20 is not limited to the embodiment and may have any winding structure well known in the art.

The first electrode 21 may be a positive electrode, and the second electrode 22 may be a negative electrode, or vice versa.

The first electrode 21 and the second electrode 22 are manufactured in the form of a sheet. The electrode sheet is manufactured by coating an active material layer 24 on the surface of a metal foil 23. The electrode sheet has a coated portion 25 where the active material layer 24 is applied, and an uncoated portion 26 where the active material layer 24 is not applied. The positive electrode sheet has an uncoated portion 26 on one widthwise side, and the negative electrode sheet has an uncoated portion 26 region on the other widthwise side.

The uncoated portion 26 protrudes from the laminate in the widthwise direction to be exposed. The uncoated portion 26 itself functions as an electrode tab.

Notches may be formed at predetermined intervals in the uncoated portion 26 to form flag-shaped notched tabs 27.

In the embodiment, the notched tab 27 is exemplified as having an isosceles trapezoidal shape. However, it may also have various shapes, such as a semicircle, a semi-ellipse, a triangle, a rectangle, or a parallelogram.

Furthermore, in the embodiment, the notched tabs 27 arranged along the longitudinal direction have the same width. However, the width of the notched tabs may also gradually or stepwise increase from the winding core toward the outer periphery.

In addition, in the embodiment, the height of the notched tabs 27 is exemplified as increasing stepwise from the winding core toward the outer periphery. However, the height of the notched tabs may also be constant or gradually decrease.

In addition, in the embodiment, a structure is exemplified in which the notched tab 27 is removed from a predetermined section of the centripetal end and a predetermined section of the distal end of the uncoated portion 26. However, it should be understood that the notched tab may not be removed from the centripetal end of the uncoated portion, and that the notched tab may not be removed from the distal end of the uncoated portion.

In the jelly-roll-type electrode assembly 20, the notched tab 27 may be radially bent and flattened, as shown in FIG. 4. The notched tab 27 may be bent radially inward or outward. The embodiment exemplifies a structure in which the notched tab 27 is bent radially inward.

The notched tabs 27 may be individually bent during the process of winding a laminate to form a jelly-roll-type electrode assembly 20. Alternatively, the notched tab 27 may be bent and processed simultaneously after the laminate is wound to form a jelly-roll-type electrode assembly 20.

The notched tabs 27 of the first electrode 21 and the notched tabs 27 of the second electrode 22, which are bent in the radial direction to overlap each other, may provide planes substantially perpendicular to the winding axis direction at both winding axis direction ends of the electrode assembly 20, respectively.

As shown in FIGS. 5 and 6, a first current collector 31 and a second current collector 32 may be joined to the substantially flat surfaces, respectively, provided by bending the notched tabs 27 exposed at both winding axis direction ends of the electrode assembly 20.

In the embodiment, the first current collector 31 is exemplified as a positive electrode current collector, and the second current collector 32 is exemplified as a negative electrode current collector. The first current collector 31 may be made of aluminum, and the second current collector 32 may be made of copper.

The current collectors 31 and 32 may be manufactured by punching, trimming, piercing, and bending a metal sheet.

Referring to FIG. 5, the first current collector 31 may include a first terminal-connecting portion 312 extending radially from the center, a ring portion 313 connecting the distal edges of the first terminal-connecting portion 312 in a circumferential direction, and a first electrode-connecting portion 314 extending from the ring portion 313 toward the center but not connected to the first terminal-connecting portion 312. The central portion of the first terminal-connecting portion 312 may cover at least a portion of the central winding hole H of the electrode assembly 20.

The first electrode-connecting portion 314 is joined to the notched tabs 27 of the first electrode 21 of the electrode assembly 20 by laser welding or the like before the electrode assembly 20 is inserted into the can 10. The laser welding line may extend radially.

Referring to FIG. 6, the second current collector 32 may include an inner ring portion 321 that defines a hole 322 corresponding to the central winding hole H of the electrode assembly 20 and is configured to surround the central winding hole H, a second electrode-connecting portion 323 that extends radially from the inner ring portion 321, and a second terminal-connecting portion 324 that is positioned further outward than the second electrode-connecting portion 323 and is connected to the inner ring portion 321. The second terminal-connecting portion 324 may have an outer ring form to surround the edge of the second current collector 32.

The second electrode-connecting portion 323 may be joined to the notched tabs 27 of the second electrode 22 of the electrode assembly 20 by laser welding or the like before the electrode assembly 20 is inserted into the can 10. The laser welding line may extend radially.

However, the shapes and structures of the first current collector 31 and the second current collector 32 are not limited to the above-described embodiment and may be variously designed. In another possible structure, the second current collector 32 may be excluded. In this case, the lid 40, which will be described later, serves as the second current collector.

As shown in FIG. 7, the electrode assembly 20 may be received inside the can 10 while the first current collector 31 is aligned to be oriented toward the bottom 12 of the can 10. In this case, an insulator 19 may be interposed between the first current collector 31 and the bottom 12 of the can 10 to electrically insulate the first current collector 31 from the bottom 12.

In the state where the electrode assembly 20 is accommodated inside the can 10, the notched tabs 27 of the second electrode 22 and the second current collector 32 may be disposed to face the open end of the side wall 11.

The first terminal-connecting portion 312 of the first current collector 31 may be joined to the first electrode terminal 13 fixed to the can 10 by resistance welding, ultrasonic welding, laser welding, or the like. The welding device for welding the first current collector 31 and the first electrode terminal 13 may access the rear surface of the center of the first terminal-connecting portion 312 of the first current collector 31 through the opening of the can 10, the hole 322 of the second current collector 32, and the central winding hole H of the electrode assembly 20, thereby performing welding. Alternatively, the first current collector 31 and the first electrode terminal 13 may also be joined using other methods, such as brazing or soldering. That is, any method of electrically connecting and securing the first current collector 31 and the first electrode terminal 13 to each other may be applicable. However, the present disclosure is not intended to exclude a structure in which the positive electrode tab is electrically connected directly to the positive electrode terminal without the positive electrode current collector.

With the electrode assembly 20 accommodated in the can 10, the open end of the can 10 may be covered and sealed by a lid 40, as shown in FIG. 8.

The can 10 and the lid 40 may be thermally bonded. The periphery of the front end of the side wall 11 of the battery can 10 and the periphery of the lid 40 may be brought into contact and then welded along the circumference. The open end of the can 10 and the lid 40 may be coupled at a contact point therebetween. For example, the open end of the can 10 and the lid 40 may be coupled by welding at a connection point therebetween. For example, the lid 40 may be joined to the can 10 using butt welding. This may be defined as a seam welding method. Since the fixing structure is simple, an electrode assembly 20 having a larger volume may be secured inside the can 10. Therefore, the seam welding method may be more advantageous in securing electric capacity relative to the same volume of the can 10.

Specifically, securing the circumference of the open end of the can 10 and the lid 40 by seam welding may be performed by preparing a lid 40 with an injection hole 42, inserting the electrode assembly 20 into the can 10, seam-welding the can 10 and lid 40, injecting electrolyte through the injection hole 42 provided in the lid 40, and sealing the injection hole 42 with a plug 50 or the like after the electrolyte injection is complete.

According to the above-implemented configuration of the present disclosure, the battery cell 1 may have a larger internal capacity while maintaining the same external dimensions as a battery cell 1 using the beading and crimping methods. Therefore, the energy density of the battery cell 1 may be increased. However, the can 10 and the lid 40 may be coupled by various coupling methods other than welding, and the coupling method is not limited thereto. By joining the can 10 and the lid 40, the battery cell 1 may ensure airtightness.

The second terminal-connecting portion 324 of the second current collector 32 and the second end of the side wall 11 may be joined by a method such as welding. The edges of the can 10 and the lid 40 may also be joined and sealed by a method such as welding. For example, after the second current collector 32 and the can 10 are joined, the lid 40 and the can 10 may be joined. As another example, after the second current collector 32 and the lid 40 are joined, the lid 40 and the can 10 may be joined. As another example, the second current collector 32, the can 10, and the lid 40 may be welded simultaneously.

The edge of the lid 40 may be joined to the open end edge of the can 10 and electrically connected thereto. The inner surface of the can 10 or the lid 40 may be electrically connected to the second current collector 32. Since the second current collector 32 is joined to the notched tab 27 of the second electrode 22 of the electrode assembly 20 accommodated inside the can 10 of the battery cell 1, when the lid 40 is electrically connected to the second current collector 32, the lid 40 may also be electrically connected to the notched tab 27 of the second electrode 22 of the electrode assembly 20. In a structure where the second current collector 32 is excluded, the shape of the lid 40 may be changed so that the lid 40 is electrically connected directly to the notched tab 27 of the second electrode 22 of the electrode assembly 20. After the can 10 is sealed with the lid 40, an electrolyte may be injected into the can 10 through the injection hole 42 formed in the lid 40.

The lid 40 may be made of a metal material. Therefore, the lid 40 may be electrically conductive. For example, the lid 40 may include aluminum. The lid 40 may be made of, for example, low-carbon steel. The lid 40 may be made of, for example, nickel-plated steel, cold-rolled steel (SPCC or SPCE), or stainless steel (SUS). The lid 40 may be manufactured, for example, by pressing a metal plate.

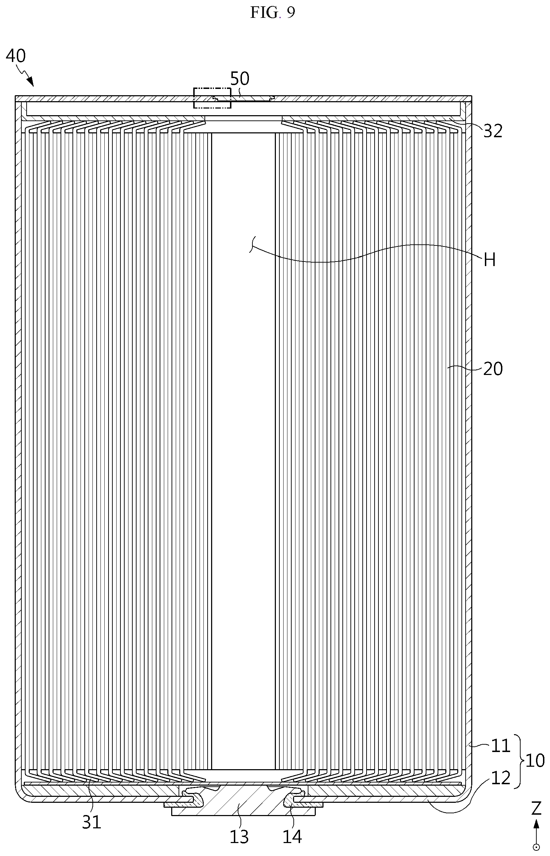

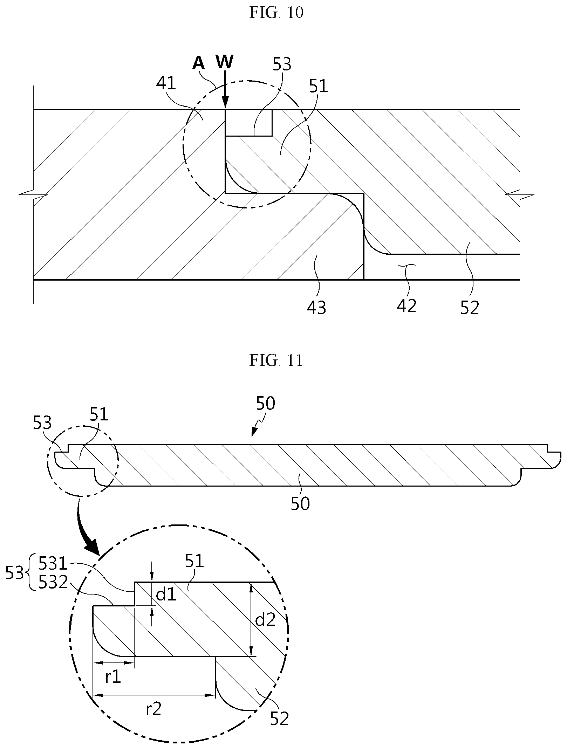

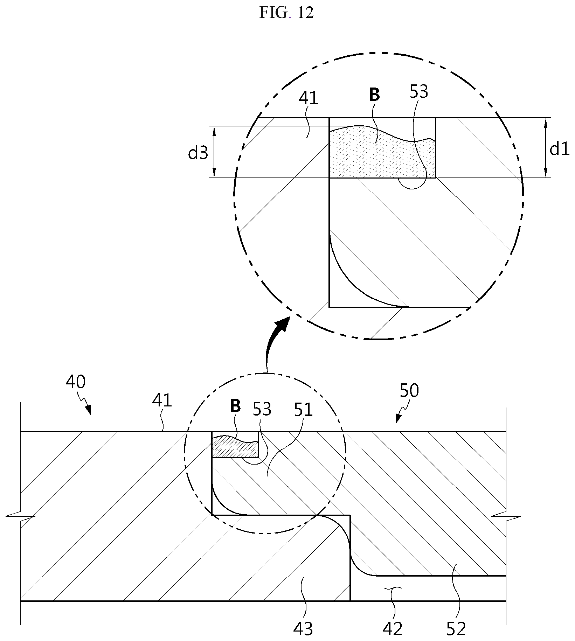

FIG. 9 is a cross-sectional view illustrating a state in which an injection hole of a lid is sealed with a plug according to an embodiment of the present disclosure. FIG. 10 is an enlarged cross-sectional view of a coupling portion between the lid and the plug in FIG. 9. FIG. 11 is a cross-sectional view of a plug according to an embodiment of the present disclosure. FIG. 12 is a cross-sectional view of a plug and a lid coupled to each other according to an embodiment of the present disclosure.

Referring to FIGS. 9 to 12, a battery cell 1 according to the present disclosure may include an electrode assembly 20, a can 10, a lid 40 having an injection hole 42, and a plug 50.

The lid 40 may have an injection hole 42 formed in at least a portion thereof. The injection hole 42 may be formed in the center of the lid 40. In this case, the injection hole 42 may be closed by a plug 50, which will be described later. For example, the plug 50 may press-fit into the injection hole 42. By blocking the injection hole 42 with the plug 50, the battery cell 1 may ensure airtightness.

The injection hole 42 may serve as, for example, an electrolyte injection port. The center of the injection hole 42 may match the center of the central winding hole H of the electrode assembly 20. That is, the injection hole 42 of the lid 40 may be positioned above the central winding hole H of the electrode assembly 20 in the winding axis direction.

Referring to FIGS. 9 and 10, the plug 50 may be configured to seal the injection hole 42. That is, the plug 50 may be configured to be inserted into the injection hole 42. At least a portion of the plug 50 may pass through the injection hole 42. By inserting the plug 50 into the injection hole 42 of the lid 40, the sealing of the battery cell 1 may be ensured. The plug 50 may pass through the injection hole 42 formed in the lid 40 to seal the exterior and interior of the can 10, preventing electrolyte leakage.

This structure may eliminate the beading and crimping processes, thereby simplifying the process. Furthermore, it is possible to prevent a reduction in the energy density caused by an increase in dead space inside the battery in the direction of the winding axis of the electrode assembly 20 due to the beading and crimping structure. That is, the structure of the present disclosure may improve the energy density of the battery cell 1.

The lid 40 may have a radial step formed around the periphery of the injection hole 42. Specifically, the lid 40 may include a body 41 and a plug-coupling portion 43. The lid 40 may be divided into the body 41 and the plug-coupling portion 43 based on the step.

The body 41 may be configured to be coupled to the can 10. The edge of the body 41 may be in vertical contact with the open end of the can 10. The body 41 may be welded to the circumference of the open end of the can 10 along the circumferential direction, which may be defined as seam welding (as described above).

The plug-coupling portion 43 may be a portion that surrounds the injection hole 42 and is recessed further downward than the body 41 in the winding axis direction. The plug-coupling portion 43 may be positioned further inward than the body 41 in the radial direction. The upper surface of the plug-coupling portion 43 may be positioned lower than the upper surface of the body 41. That is, a step may be formed between the plug-coupling portion 43 and the body 41, and the step may have a ring shape extending in the circumferential direction around the injection hole 42. The step may be formed by forging.

The winding axis direction thickness of the plug-coupling portion 43 may be formed to be less than the winding axis direction thickness of the body 41. The plug 50 may be seated on the plug-coupling portion 43. A lid-coupling portion 51 of the plug 50, which will be described later, may be seated on the plug-coupling portion 43.

According to the above-described embodiment of the present disclosure, a structure in which the lid-coupling portion 51 of the plug 50 is seated may be formed by forging the area surrounding the injection hole 42.

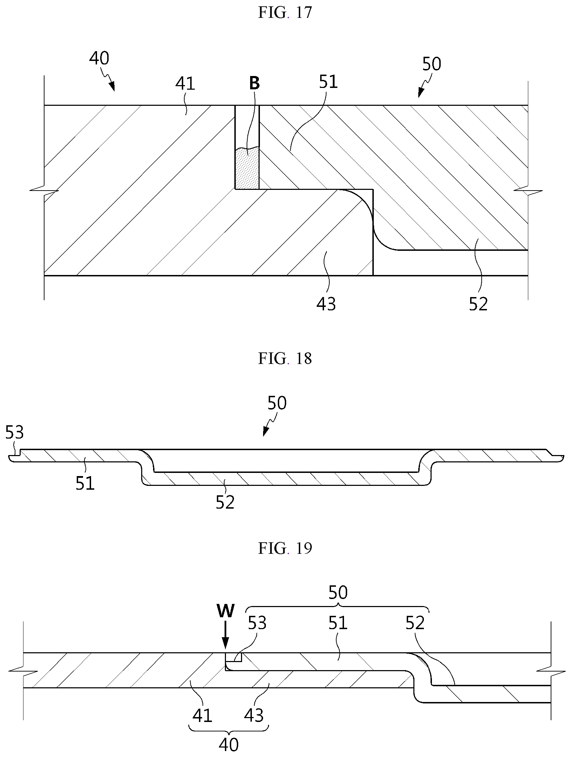

In addition, according to the above-described embodiment of the present disclosure, the plug-coupling portion 43 to which the plug 50 is coupled may be formed to be recessed downward toward the electrode assembly 20, thereby ensuring that the overall height of the battery cell 1 remains constant even when the plug 50 is coupled. That is, when the plug 50 and lid 40 are coupled, the upper surface of the plug 50 may not protrude further upward than the upper surface of the lid 40. In other words, no difference in total height may be generated in the battery cell 1. Therefore, the contact portion and/or contact area with a component (e.g., a heat sink) positioned on the upper side of the lid 40 is not limited by the plug 50, and may be maximized. As a result, the cooling performance of the battery cell 1 and/or battery pack (e.g., the battery pack P in FIG. 19) may be improved.

The plug 50 may have a radial step. Specifically, the plug 50 may include a lid-coupling portion 51, an insertion portion 52, and an edge portion 53.

The lid-coupling portion 51 may be positioned on the lid 40. The lid-coupling portion 51 may be seated on the plug-coupling portion 43 of the lid 40. The lid-coupling portion 51 may be disposed to overlap the plug-coupling portion 43 of the lid 40 in the winding axis direction. In addition, the lid-coupling portion 51 may be disposed parallel to the lid 40. The lid-coupling portion 51 may be disposed parallel to the body 41 of the lid 40.

The insertion portion 52 may be positioned radially inward from the lid-coupling portion 51. The insertion portion 52 may be a portion protruding from the lid-coupling portion 51 toward the electrode assembly 20. The insertion portion 52 may be a portion protruding downward from the lid-coupling portion 51. The lower surface of the insertion portion 52 may be positioned lower than the lower surface of the lid-coupling portion 51.

According to an embodiment, referring to FIG. 10, the upper surface of the plug 50 may be a generally flat surface in the horizontal direction. That is, the upper surfaces of the insertion portion 52 and the lid-coupling portion 51 may be disposed on the same horizontal plane. In this case, the winding axis direction thickness of the insertion portion 52 may be formed to be greater than the winding axis direction thickness of the lid-coupling portion 51. For example, the insertion portion 52 and the lid-coupling portion 51 of the plug 50 may be formed using a forging process.

The insertion portion 52 may be configured to be inserted into the injection hole 42. For example, the insertion portion 52 may be inserted into the injection hole 42 by force-fitting. For example, the outer diameter of the insertion portion 52 may be formed to be substantially equal to or greater than the inner diameter of the injection hole 42. Therefore, the sealing force of the injection hole 42 may be adjusted by inserting the insertion portion 52 into the injection hole 42. The insertion portion 52 may be inserted into the injection hole 42, thereby primarily sealing the injection hole 42.

According to the above-described embodiment of the present disclosure, since the plug 50 has the insertion portion 52, it may be press-fitted into the injection hole 42 and remain fixed therein even before welding. In addition, it may prevent the plug 50 from being separated from the injection hole 42 while being transported to a welding device. That is, before welding the lid 40 and plug 50, the insertion portion 52 of the plug 50 may be press-fitted into the injection hole 42 to secure a temporary sealing force. Therefore, it is possible to prevent deterioration of weld quality due to electrolyte vaporization. For example, the temporary sealing force secured by press-fitting the plug 50 may be 10⁻⁵ to 10⁻³ atm·cc/s in terms of a He leak rate.

The lid-coupling portion 51 of the plug 50 and the body 41 of the lid 40 may be configured to abut each other in the radial direction and be welded. The outer surface of the lid-coupling portion 51, which is directed radially outward, may face the inner surface of the body 41, which is directed radially inward. Welding W may be performed between the outer surface of the lid-coupling portion 51, which is directed radially outward, and the inner surface of the body 41, which is directed radially inward. For example, the lid-coupling portion 51 may be joined to the lid 40 using butt welding W. Welding W may be performed at the edge of the body 41 and/or the lid-coupling portion 51. For example, resistance welding, ultrasonic welding, or laser welding may be used for welding W.

According to the above-implemented configuration of the present disclosure, the plug 50 and the lid 40 may be welded to ensure a final sealing force higher than the temporary sealing force. Therefore, high airtightness may be ensured. In addition, compared to cases where sealing force is secured solely through press-fitting, the press-fit force of the plug 50 may be significantly reduced, thereby preventing permanent deformation of the lid 40 or can 10 due to the press-fit force. For example, the final sealing force secured through welding may have a He leak rate of approximately 10⁻⁷ atm.cc/s or less. That is, high airtightness may be ensured.

In addition, according to the above-implemented configuration of the present disclosure, since welding is performed after securing temporary sealing force, it is possible to prevent electrolyte vapor from leaking to the outside and igniting during the welding process. Therefore, it is possible to prevent or delay events resulting from thermal runaway in a vehicle including multiple battery cells, such as fire or explosion.

Referring to part A in FIGS. 10 and 11, the edge portion 53 may be located at the edge of the lid-coupling portion 51. The edge portion 53 may refer to a groove or recess structure located at the edge of the lid-coupling portion 51.

The edge portion 53 may be a portion to be recessed further downward than other regions from the upper surface of the plug 50 in the winding axis direction. The edge portion 53 may be a portion that is recessed further downward than the lid-coupling portion 51 in the winding axis direction. For example, the height of the upper surface of the edge portion 53 in the winding axis direction may be lower than the height of the upper surface of the lid-coupling portion 51 in the winding axis direction. That is, the lid-coupling portion 51 may have a step formed at the edge of its upper surface.

For example, the edge portion 53 may be formed by forging the edge of the lid-coupling portion 51. As another example, the edge portion 53 may be formed from the edge of the plug 50 using at least one of extrusion, pressing, and casting methods.

The edge portion 53 may be formed along the entire circumferential edge of the plug 50 or at least a portion thereof. For example, the edge portion 53 may be configured in the form of a ring along the circumferential edge of the plug 50. For example, the edge portion 53 may be formed discontinuously in the form of multiple arcs formed in some areas along the circumferential edge of the plug 50. That is, the edge portion 53 may be formed only in the area where welding is performed.

Referring to FIG. 11, for example, the maximum recess depth d1 of the edge portion 53 in the winding axis direction may be in the range of approximately 20% to 60% of the thickness d2 of the lid-coupling portion 51 in the winding axis direction. For example, the maximum recess depth d1 of the edge portion 53 in the winding axis direction may be in the range of approximately 30% to 50% of the thickness d2 of the lid-coupling portion 51 in the winding axis direction.

According to the above-described embodiment of the present disclosure, if the maximum recess depth d1 of the edge portion 53 in the winding axis direction is lower than 20% of the thickness d2 of the lid-coupling portion 51 in the winding axis direction, it is likely to be shorter than the maximum height of the lid-coupling portion 51. On the other hand, if the maximum recess depth d1 of the edge portion 53 in the winding axis direction exceeds 60% of the thickness d2 of the lid-coupling portion 51 in the winding axis direction, the electrolyte may vaporize due to the welding heat, and the vaporized electrolyte gas may reach the edge portion 53, potentially degrading welding performance.

That is, this ratio may be configured to ensure that the weld bead B is stably stored inside the edge portion 53, while suppressing unnecessary protrusion of the plug 50 or lid 40 from the outer surface and maintaining a uniform overall cross-sectional shape. However, the above values are merely exemplary ranges based on specific embodiments, and in actual design, the recess depth d1 may be appropriately modified and adjusted to meet the structural and functional requirements, comprehensively considering various factors such as the applicable welding method (e.g., laser welding, resistance welding, or the like), welding amount, shape and material of the edge portion 53, and assembly tolerances.

For example, the maximum horizontal length r1 of the edge portion 53 may be 5% to 30% of the horizontal separation distance r2 between the lid-coupling portion 51 and the insertion portion 52. For example, the maximum horizontal length r1 of the edge portion 53 may be 10% to 20% of the horizontal separation distance r2 between the lid-coupling portion 51 and the insertion portion 52. The horizontal separation distance r2 between the lid-coupling portion 51 and the insertion portion 52 may refer to the separation distance between the outer surface of the lid-coupling portion 51 and the outer surface of the insertion portion 52.

According to the above embodiment of the present disclosure, if the maximum horizontal length r1 of the edge portion 53 is less than 5% of the horizontal separation distance r2 between the lid-coupling portion 51 and the insertion portion 52, it may be difficult to sufficiently store the weld bead B. On the other hand, if the maximum horizontal length r1 of the edge portion 53 exceeds 30% of the horizontal separation distance r2 between the lid-coupling portion 51 and the insertion portion 52, the injection hole 42 and the edge portion 53 are not sufficiently spaced apart in the radial direction, and the vaporized gas of the electrolyte due to the welding heat is likely to reach the edge portion 53, thereby deteriorating the welding performance.

Referring to FIG. 11, the edge portion 53 may include an edge side surface 531 extending downward from the upper surface of the lid-coupling portion 51, and an edge bottom surface 532 extending radially outward from the lower end of the edge side surface 531. For example, as shown in FIG. 11, the edge side surface 531 may be a surface extending in the vertical direction parallel to the winding axis. For example, the edge bottom surface 532 may be a surface extending in the horizontal direction perpendicular to the winding axis. For example, the edge side surface 531 and the edge bottom surface 532 may meet vertically. However, the shape of the edge portion 53 is not limited to the above-described embodiment and may be designed in various ways. For example, the edge side surface 531 may be a surface inclined at a predetermined angle (e.g., an acute angle) with respect to the winding axis. For example, the edge bottom surface 532 may be a surface inclined at a predetermined angle (e.g., an acute angle) with respect to the horizontal plane.

Referring to FIG. 12, the weld bead B formed during the process of welding the plug 50 and the lid 40 may be configured to settle on the edge portion 53. That is, when welding the lid-coupling portion 51, the edge portion 53 having a step may accommodate the weld bead B. Specifically, the weld bead B may settle inside a space surrounded by the edge portion 53 and the inner surface of the body 41 of the lid 40.

The plug 50 and the lid 40 may melt at a certain temperature or higher. The melting points of the plug 50 and/or the lid 40 may be approximately 100°C to 1400°C. That is, the plug 50 and the lid 40 may be welded and joined by applying heat of 100°C to 1,400°C. In this case, the portion that is locally heated by welding to reach the melting point and then solidified to join the plug 50 and the lid 40 may be referred to as a weld bead.

The maximum recess depth d1 of the edge portion 53 in the winding axis direction may be greater than the maximum thickness d3 of the weld bead B formed along the winding axis. That is, the weld bead B may not protrude further upward than the upper surface of the plug 50 or the upper surface of the lid 40.

According to the above-implemented configuration of the present disclosure, no difference in the overall height of the battery cell 1 due to the presence and/or shape of the weld bead B may be generated. In a case where the weld bead B protrudes outside the plug 50, a large amount of a coating agent, such as thermal grease, must be applied to form a flat surface. However, according to an embodiment of the present disclosure, the contact area with the heat sink may be widened even without applying a large amount of the coating agent.

According to the above-implemented configuration of the present disclosure, the flatness of the battery cell 1 may be secured. Since the height of the battery cell 1 may be maintained constant, this may be advantageous in terms of battery cell 1 management. That is, the overall height deviation may not be generated in the battery cell 1. As a result, the contact portion and/or contact area with a component (e.g., a heat sink) positioned on the lid 40 is not limited by the weld bead B, and may be maximized. Therefore, the heat dissipation and cooling performance of the battery cell 1 and/or battery pack may be improved.

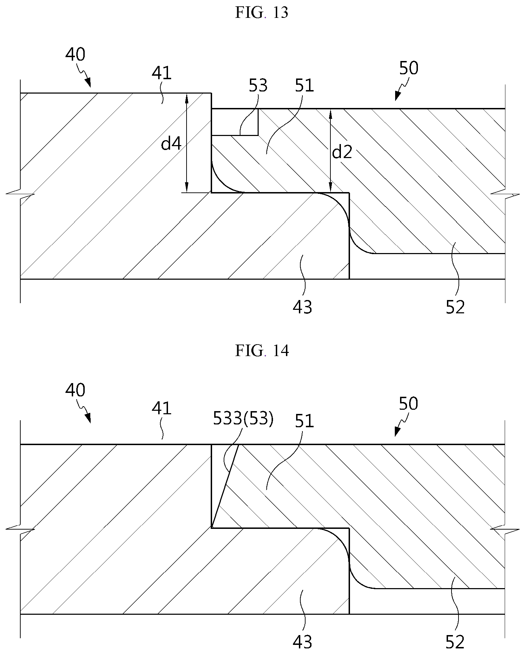

FIG. 13 is a cross-sectional view of a coupling structure of a lid and a plug according to another embodiment of the present disclosure.

The height of the upper surface of the lid-coupling portion 51 of the plug 50 in the winding axis direction may be equal to (see FIG. 12) or less than (see FIG. 13) the height of the upper surface of the body 41 of the lid 40 in the winding axis direction.

Referring to FIG. 13, the winding axis direction height of the upper surface of the lid-coupling portion 51 of the plug 50 may be less than the winding axis direction height of the upper surface of the body 41 of the lid 40. That is, the winding axis direction thickness d2 of the lid-coupling portion 51 of the plug 50 may be less than the separation distance d4 between the upper surface of the plug-coupling portion 43 of the lid 40 and the upper surface of the body 41 in the winding axis direction.

If the height of the plug 50 is greater than that of the lid 40, there is a problem in that the lid 40 is not sufficiently melted due to the plug 50 during welding. For example, when laser-welding the plug 50 and the lid 40, a laser beam may be irradiated such that its center is aligned with the winding axis. In this case, the laser beam may be irradiated so that it advances radially outward as it advances downward. That is, the laser beam may be irradiated at an angle relative to the horizontal plane. In this case, if the plug 50 is positioned higher than the lid 40, the laser beam is unlikely to be sufficiently irradiated onto the lid 40, resulting in poor welding quality.

According to the above-implemented configuration of the present disclosure, the winding axis direction height of the plug 50 is formed to be less than the winding axis direction height of the facing lid 40 in contact with the plug 50, thereby sufficiently irradiating the laser beam to the lid 40 to improve welding quality.

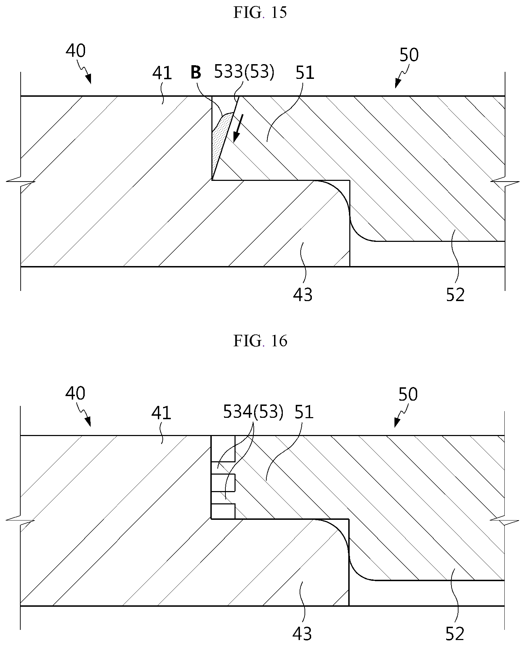

FIG. 14 is a cross-sectional view of a coupling structure of a lid and a plug according to another embodiment of the present disclosure. FIG. 15 is a cross-sectional view of a lid and a plug after welding according to another embodiment of the present disclosure.

The edge portion 53 may include an edge inclined surface 533 that is inclined downward and radially outward from the upper surface of the lid-coupling portion 51.

The edge inclined surface 533 may be formed to extend continuously from the upper surface of the lid-coupling portion 51 to the lower surface thereof. Therefore, the maximum recess depth of the edge portion 53 in the winding axis direction may be further increased.

Referring to FIG. 15, this configuration may guide the weld bead B along the edge inclined surface 533 in a downward direction during the welding process between the lid 40 and the plug 50, so that the weld bead B may be accumulated or collected in the lower region of the edge portion 53.

According to the above-described embodiment of the present disclosure, a structural margin may be provided to effectively suppress the phenomenon of the weld bead B unnecessarily protruding upward from the upper surface of the lid 40 or plug 50.

In addition, according to the above-implemented configuration of the present disclosure, the size and shape of the welding bead B may be controlled, and the weldable area may be expanded in the winding axis direction according to the shape of the edge inclined surface 533, thereby improving the mechanical strength and joint reliability of the lid-coupling portion 51.

FIG. 16 is a cross-sectional view of a coupling structure of a lid and a plug according to another embodiment of the present disclosure. FIG. 17 is a cross-sectional view of a lid and a plug after welding according to another embodiment of the present disclosure.

The edge portion 53 may include a plurality of edge protrusions 534 protruding outward from the radially outer surface of the lid-coupling portion 51.

The plurality of edge protrusions 453 may be spaced apart from each other along the vertical direction. The plurality of edge protrusions 453 may extend from the outer surface of the lid-coupling portion 51 to come into contact with the body 41 of the lid 40. The plurality of edge protrusions 453 may be configured to directly contact the body 41 of the lid 40, thereby optimizing the thermal propagation path during laser welding. However, the array density, shapes, and vertical spacing of the edge protrusions 453 may be designed in various ways.

For example, the edge protrusion 453 may be formed in a shape having a rectangular cross-section. However, the shape of the edge protrusion 453 is not limited to the above-described embodiment and may be designed in various ways.

According to the above-implemented configuration of the present disclosure, the plurality of edge protrusions 453 may be sequentially exposed to the laser beam from top to bottom so that they are partially and locally heated and melted, and the molten edge protrusions 453 may fall downward and accumulate under the influence of gravity and surface tension. The molten edge protrusions 453 may continuously solidify from below to form a weld bead B in a predetermined shape.

In addition, according to the above-implemented configuration of the present disclosure, a structural margin may be provided to effectively suppress unnecessarily protruding of the weld bead B upward from the upper surface of the lid 40 or plug 50. That is, the gap between the lid-coupling portion 51 and the body 41 may be provided as a space capable of accommodating the weld bead B.

Furthermore, according to the above-implemented configuration of the present disclosure, since the edge protrusion 453 itself is melted by welding, the size and shape of the weld bead B may be controlled. In addition, since the weldable area is expanded in the winding axis direction, the mechanical strength and joint reliability of the lid-coupling portion 51 may also be improved.

FIG. 18 is a cross-sectional view of a plug according to another embodiment of the present disclosure. FIG. 19 is a cross-sectional view illustrating a lid and a plug coupled to each other according to another embodiment of the present disclosure.

The configuration of the lid 40 and plug 50 and the welding W of the lid 40 and plug 50 are the same as those described with reference to FIGS. 9 to 17, and redundant descriptions thereof will be omitted.

The lid-coupling portion 51 and the insertion portion 52 of the plug 50 may have substantially the same thickness in the winding axis direction. The lid-coupling portion 51 and the insertion portion 52 of the plug 50 may be formed integrally. That is, the plug 50 may be bent between the lid-coupling portion 51 and the insertion portion 52.

The plug 50 may be configured to be formed by drawing. Drawing may refer to a process for stretching and thinning metal into a desired shape. Drawing may be a process of drawing and elongating a material, such as a metal sheet or wire, through a mold. For example, a deep drawing process may be a method of forming a plate into a deep container shape using a punch or die. Specifically, the plug 50 may be manufactured by deep drawing. Specifically, the plug 50 may be manufactured by fixing the end of a plug preform, which has a plate shape of a predetermined thickness, and applying pressure to the center of the plug preform.

According to the above-implemented configuration of the present disclosure, which utilizes a drawing method, the radial separation distance between the lid-coupling portion 51 and the insertion portion 52 may become relatively long, compared to the forging method. Therefore, it is possible to prevent the electrolyte vapor generated by the welding heat from directly contacting the lid-coupling portion 51. That is, the electrolyte vaporization path may extend. Therefore, welding defects caused by the electrolyte vaporization heat may be prevented.

According to the above-implemented configuration of the present disclosure, the plug 50 may be manufactured by drawing, thereby reducing its weight and contributing to a reduction in the overall weight of the battery cell 10. In addition, the manufacturing cost of the plug 50 may be reduced, and the simple and easy processing of the plug 50 may shorten the manufacturing time.

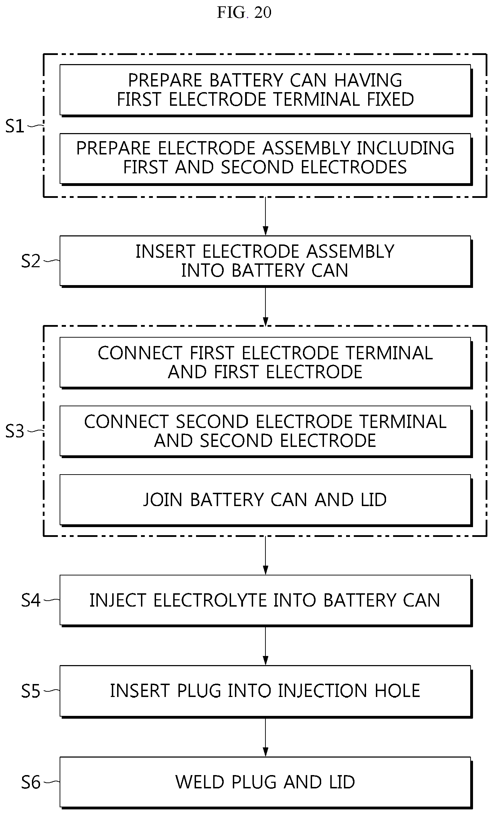

FIG. 20 is a flowchart of a method for manufacturing a battery cell to which an injection hole sealing structure of the present disclosure is applied. Hereinafter, a method for manufacturing a battery cell according to the embodiments of the present disclosure will be described with reference to FIG. 20. For convenience of explanation, the drawings in FIGS. 1 to 19 may be referenced.

First, an electrode assembly 20 including a can 10 having a first electrode terminal 13 fixed to the bottom 12 in an insulating and sealing manner, and a first current collector 31 and a second current collector 32 welded to a first electrode and a second electrode, respectively, at opposite ends may be prepared (S1).

Next, the method may include a step of covering the open end with the lid 40 while the electrode assembly 20 is accommodated in the can 10 (S2).

The electrode assembly 20 may be received inside the can 10 while the first current collector 31 is aligned to be oriented toward the bottom 12 of the can 10. At this time, an insulator 19 may be interposed between the first current collector 31 and the bottom 12 of the can 10 to electrically insulate the first current collector 31 and the bottom 12 from each other.

The edge of the lid 40 may be joined to the can 10 (S3). The lid 40 and the can 10 may be thermally joined.

The periphery of the front end of the side wall 11 of the battery can 10 and the periphery of the edge of the lid 40 may be brought into contact and then welded along the circumferential direction. The open end of the can 10 and the lid 40 may be coupled at a contact point therebetween. For example, the open end of the can 10 and the lid 40 may be coupled by welding at a connection point therebetween. For example, the lid 40 may be joined to the can 10 using butt welding. This may be defined as a seam welding method.

In addition, before joining the edge of the lid 40 to the can 10, the first current collector 31 may be thermally bonded to the first electrode terminal 13. In addition, the open end of the can 10 may be covered with the lid 40 to seal the opening, and the second current collector 32 may be joined to the can 10 and/or the lid 40, which is the second electrode terminal 15, so as to be electrically connected to the can 10 and lid 40, and the lid 40 may be thermally bonded to the can 10.

Next, the method may include a step of injecting an electrolyte into the battery can 10 through the injection hole 42 of the lid 40 (S4).

Next, a step of inserting a plug 50 into the injection hole 42 after injecting the electrolyte may be included (S5). The insertion portion 52 of the plug 50 may be configured to be inserted into the injection hole 42. For example, the insertion portion 52 may be inserted into the injection hole 42 by force-fitting. The insertion portion 52 may be inserted into the injection hole 42 to primarily seal the injection hole 42.

According to the above-described embodiment of the present disclosure, since the plug 50 has the insertion portion 52, it may be press-fitted into the injection hole 42 and remain fixed therein even before welding. In addition, it may prevent the plug 50 from being separated from the injection hole 42 while being transported to a welding device. That is, before welding the lid 40 and plug 50, the insertion portion 52 of the plug 50 may be press-fitted into the injection hole 42 to secure a temporary sealing force.

Finally, the method may include a step of welding the plug 50 and the lid 40 (S6).

The sealing may be performed by press-fitting the plug 50 into the injection hole 42 to preferentially secure a temporary sealing force, and then welding the lid-coupling portion 51 of the plug 50 and the lid 40 to obtain the final sealing force.

For example, the lid-coupling portion 51 of the plug 50 and the body 41 of the lid 40 may be laser-welded. Laser welding may be defined as a process of melting and joining metals using a high-energy density laser beam.

According to the above-implemented configuration of the present disclosure, since welding is performed after securing a temporary sealing force, the formation of gas channels or cracks may be prevented during the welding process, thereby preventing defects in the lid-coupling portion 51.

Furthermore, according to the above-implemented configuration of the present disclosure, since welding is performed after securing a temporary sealing force, it is possible to prevent the electrolyte vapor from leaking to the outside and igniting during the welding process.

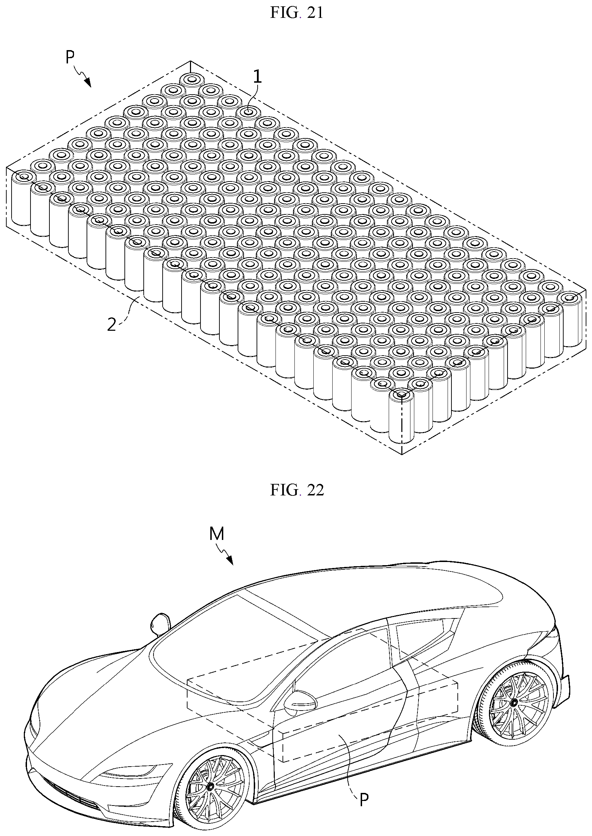

FIG. 21 is a drawing illustrating a battery pack according to an embodiment of the present disclosure. FIG. 22 is a drawing illustrating a vehicle including the battery pack in FIG. 21.

Referring to FIG. 21, the battery pack P according to the present disclosure may include at least one battery cell 1 according to the present disclosure described above. In addition, the battery pack P according to the present disclosure may include a pack housing 2 capable of storing one or more battery cells 1. The battery pack P may be configured using a battery module, which is an intermediate assembly form, or may be configured directly without a battery module, as shown in the drawing. Since the battery cell 1 itself has a large volume, there may be no difficulty in implementing the battery pack P even without using an intermediate structure such as a battery module.

In addition, the battery pack P may further include various other components of the battery pack P, such as a BMS, relays, and current sensors, which were known at the time of filing of the present disclosure, in addition to the battery cell 1.

The battery pack P may include a plurality of battery cells 1. The battery cells 1 may be arranged in a predetermined number of rows so that both the first electrode terminal 13 and the second electrode terminal 15 of each battery cell 1 are positioned on the upper side. Therefore, when electrically connecting plurality of battery cells 1, both the positive and negative electrodes may be connected from one direction, thereby simplifying the electrical connection structure. This increases the number of battery cells 1 capable of being mounted in the same space, thereby improving energy density and facilitating electrical wiring. Therefore, the space efficiency is excellent, and the electrical wiring efficiency is high, thereby significantly improving the efficiency in the assembly process of the electric vehicle and in the assembly and maintenance of the battery pack P. In addition, as previously described, each battery cell 1 may have a higher energy density than before. The battery pack P with such a higher energy density may store the same amount of energy while reducing its volume and weight.

Therefore, when the battery pack P equipped with such battery cells 1 is mounted to a vehicle M that uses electricity as its energy source, as shown in FIG. 18, the vehicle's mileage per unit energy may be further increased.

In addition, the battery pack P may further include a heat sink. The pack housing 2 may store the heat sink. The heat sink may be positioned, for example, at the bottom of the battery cell 1. In this case, the heat sink may contact the lid (e.g., the lid 40 in FIG. 12) and/or the plug (e.g., the plug 50 in FIG. 12) of the battery cell 1. According to the above-implemented configuration of the present disclosure, the upper surface of the plug 50 may not protrude upward beyond the upper surface of the lid 40. In addition, the weld bead (e.g., the weld bead B in FIG. 12) may not protrude upward beyond the upper surface of the lid 40. That is, since there is no difference in the overall height of the battery cell 1, the contact portion and/or contact area between the lid 40 and the heat sink may be maximized, instead of being limited by the plug 50 and/or the weld bead B. As a result, the cooling performance of the battery cell 1 and/or the battery pack P may be improved.

Referring to FIG. 22, the vehicle M according to the present disclosure may include at least one battery pack P according to the present disclosure.

The battery cell 1 according to the present disclosure may be applied to vehicles such as electric vehicles or hybrid vehicles. That is, the vehicle M according to the present disclosure may include a battery cell 1 according to the present disclosure or a battery pack P according to the present disclosure. In addition, the vehicle M according to the present disclosure may further include various other components included in the vehicle, in addition to the battery cell 1 or battery pack P. For example, the vehicle M according to the present disclosure may further include a car body, a motor, a control device such as an electronic control unit (ECU), and the like, in addition to the battery cell 1 according to the present disclosure. The vehicle M includes a four-wheel vehicle and a two-wheel vehicle. The vehicle M may operate by power supplied from the battery pack P according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains

## Claims

1. A battery cell comprising:
an electrode assembly configured by winding a first electrode, a second electrode, and a separator interposed therebetween around a winding axis;
a can configured to receive the electrode assembly through an open end formed on one side;
a lid configured to cover the open end and having an injection hole formed therein; and
a plug configured to seal the injection hole,
wherein the plug comprises: a lid-coupling portion positioned on the lid; an insertion portion positioned radially inward from the lid-coupling portion and protruding from the lid-coupling portion so as to be inserted into the injection hole; and an edge portion positioned at an edge of the lid-coupling portion and recessed further downward than the lid-coupling portion in a winding axis direction.

2. The battery cell of claim 1,
wherein the edge portion is configured in the form of a ring along a circumferential edge of the plug.

3. The battery cell of claim 1,
wherein the edge portion is formed by forging an edge of the lid-coupling portion.

4. The battery cell of claim 1,
wherein a maximum recess depth of the edge portion in the winding axis direction is within a range of 20% to 60% of a thickness of the lid-coupling portion in the winding axis direction.

5. The battery cell of claim 1,
wherein a weld bead formed during welding of the plug and the lid is configured to settle on the edge portion.

6. The battery cell of claim 5,
wherein a maximum recess depth of the edge portion in the winding axis direction is greater than a maximum thickness of the weld bead formed along the winding axis direction.

7. The battery cell of claim 6,
wherein the edge portion comprises an edge side surface extending downward from an upper surface of the lid-coupling portion, and an edge bottom surface extending radially outward from a lower end of the edge side surface.

8. The battery cell of claim 1,
wherein the lid comprises a body; and a plug-coupling portion surrounding the injection hole and recessed further downward than the body in the winding axis direction, and configured such that the lid-coupling portion is seated thereon.

9. The battery cell of claim 8,
wherein a height of an upper surface of the lid-coupling portion of the plug in the winding axis direction is less than a height of an upper surface of the body of the lid in the winding axis direction.

10. The battery cell of claim 8,
wherein the lid-coupling portion of the plug and the body of the lid are welded to each other while abutting each other in a radial direction.

11. The battery cell of claim 1,
wherein the edge portion comprises an edge inclined surface inclined downward and radially outward from an upper surface of the lid-coupling portion.

12. The battery cell of claim 1,
wherein the insertion portion is configured to be inserted into the injection hole by force-fitting to primarily seal the injection hole.

13. The battery cell of claim 1,
wherein the lid-coupling portion and the insertion portion have the same thickness in the winding axis direction and are formed integrally.

14. A battery pack comprising at least one battery cell according to any one of claims 1 to 13.

15. A vehicle comprising at least one battery cell according to any one of claims 1 to 13.
